(19) Europäisches Patentamt
European Patent Office
Office européen des brevets

(11) **EP 3 276 858 B1**

(12) **EUROPEAN PATENT SPECIFICATION**

(45) Date of publication and mention
of the grant of the patent:
**25.09.2019 Bulletin 2019/39**

(51) Int Cl.:
**H04J 3/14** (2006.01)   **H04L 7/00** (2006.01)
**H04W 52/02** (2009.01)

(21) Application number: **16182008.9**

(22) Date of filing: **29.07.2016**

(54) **PATTERN DETECTION**

MUSTERERKENNUNG

DÉTECTION DE MOTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.01.2018 Bulletin 2018/05**

(73) Proprietor: **NXP B.V.**
**5656 AG Eindhoven (NL)**

(72) Inventors:
• **POSCH, Martin**
**Redhill, Surrey RH1 1SH (GB)**
• **PERISSAKIS, Stylianos**
**Redhill, Surrey RH1 1SH (GB)**

(74) Representative: **Hardingham, Christopher Mark**
**NXP SEMICONDUCTORS**
**Intellectual Property Group**
**Abbey House**
**25 Clarendon Road**
**Redhill, Surrey RH1 1QZ (GB)**

(56) References cited:
**CA-A1- 2 370 577      US-A1- 2003 169 831
US-A1- 2014 051 364      US-B1- 6 438 187
US-B1- 7 796 694**

## Description

The present disclosure relates to the field of pattern detection, and in particular to a pattern detection unit for a transceiver in an automotive access system.

Passive keyless entry (PKE) and passive keyless go (PKG) systems have gained popularity in recent years. In operation, when a car user has a key apparatus that is equipped with a PKE chip and the user approaches a car and attempts to opens the door, a low frequency (LF) communication sequence is sent from the car to the key, and an ultra-high frequency (UHF) communication is sent from the key to the car via a different physical link, and the door is unlocked. Cryptology is involved in both communications to make sure the correct key and car are identified. The same interaction can work with a start button for a vehicle using PKG. When the user presses the start button, an LF communication is sent to the key, which returns a UHF signal to the vehicle to enable the user to start the car. US6438187 (B1) relates to a status phase processor for a data pattern correlator providing an optimized synchronization signal. The phase processor generates a synchronization signal for adjusting a data acquisition clock in a communication system. CA2370577 (A1) relates to an offset estimation and bit timing system and method. The offset estimation system is implemented in a Bluetooth-enabled wireless receiver adapted to receive a signal transmitted with a known bit pattern. US2003169831 (A1) relates to a data assisted serial link decoder using oversampling. US7796694 (B1) discloses a circuit for encoding code phase modulated signals. US2014051364 (A1) relates to a system in which wireless communication is effected between a vehicle base station and a remote transceiver circuit, such as for providing PKE access to a vehicle. The remote transceiver circuit 120 includes a receiver 125, a transmitter 150, a controller circuit 145, a statemachine 140, and a data-receiving circuit 135.

The invention is defined by the claims. A pattern detection unit is also disclosed, comprising:

a shift register configured to over-sample a multi-bit input signal such that each bit of the input signal is represented by a plurality of samples in the shift register; and
a correlator configured to compare a target pattern with two or more of the plurality of samples of each bit from the shift register in order to determine whether the input signal matches the target pattern. In one or more embodiments the correlator is configured to determine a match in response to each bit of the target pattern matching all of the two or more samples of a corresponding bit-value from the shift register. In one or more embodiments the correlator is configured to compare the target pattern to consecutive samples from the shift register of each bit of the input signal. In one or more embodiments the correlator is configured to compare the target pattern with one of the plurality of samples of each bit and, optionally in parallel, to compare the target pattern with another of the plurality of samples of each bit in order to compare the target pattern to the two or more samples of each bit.

In one or more embodiments the correlator comprises one or more of:

a first plurality of bit comparison units, each bit comparison unit configured to compare one sample of a particular bit from the shift register with a corresponding bit-value of the target pattern and determine a first bit-comparison value based on the comparison;
a second plurality of bit comparison units, each bit comparison unit configured to compare another sample of the particular bit from the shift register with a corresponding bit-value of the target pattern and determine a second bit-comparison value based on the comparison; and
a code comparison unit, wherein the code comparison unit is configured to process the first and second bit-comparison values in order to determine a match indication signal that is representative of whether or not the input signal matches the target pattern for a single clock cycle.

In one or more embodiments the correlator is configured to compare the target pattern with one of the plurality of samples of each bit and, subsequently or separately, to compare the target pattern to another of the plurality of samples of each bit in order to compare the target pattern to the two or more samples of each bit.

In one or more embodiments the correlator comprises one or more of:

a plurality of bit comparison units, each bit comparison unit configured to compare one sample of a particular bit from the shift register with a corresponding bit-value of the target pattern and determine a bit-comparison value based on the comparison;
a code comparison unit, wherein the code comparison unit is configured to process the bit-comparison values in order to determine a match indication signal that is representative of whether or not the input signal matches the target pattern for a single clock cycle; and
a sequence detector configured to determine whether the input signal matches the target pattern based on two or more match indication signals provided by the code comparison unit for different clock cycles.

In one or more embodiments the two or more match indication signals are provided by the code comparison unit for consecutive clock cycles.

In one or more embodiments the sequence detector comprises:

a buffer configured to receive the match indication signal of the code comparison unit and provide a buffered match indication signal; and

an AND unit having a first input terminal, a second input terminal and an output terminal, in which the first input terminal is configured to receive the match indication signal of the code comparison unit, the second input terminal is configured to receive the buffered match indication signal from the buffer.

In one or more embodiments the sequence detector is configured to

provide an output signal;
set the output signal as a matching-value in response to two consecutive match indication signals being indicative of the input signal matching the target pattern; and
maintain the output signal as the matching-value for the same number of consecutive clock cycles that the match indication signals are indicative of the input signal matching the target pattern.

In one or more embodiments the sequence detector is configured to

provide an output signal;
set the output signal as a matching-value in response to two or more match indication signals from a group-of-match-indication-signals being indicative of the input signal matching the target pattern; and
maintain the output signal as the matching-value for the number of clock cycles that are represented by the group-of-match-indication-signals.

In one or more embodiments the pattern detection is configured to be operable in a first-mode-of-operation and a second-mode-of-operation, wherein:

in the first-mode-of-operation:
the correlator is configured to compare the target pattern with two or more of the plurality of samples of each bit from the shift register in order to determine whether or not the input signal matches the target pattern; and
in the second-mode-of-operation:
the correlator is configured to compare the target pattern with only one of the plurality of samples of each bit from the shift register in order to determine whether or not the input signal matches the target pattern; and
the pattern detection unit may further comprise a controller configured to set the mode of operation of the pattern detection unit based on user input or automatically.

In one or more embodiments the pattern detection comprises a memory for storing the target pattern, in which the memory may be operatively connected to the correlator for providing the target pattern to the correlator.

There may be provided a key fob for a vehicle comprising a receiver, wherein the receiver comprises any pattern detection disclosed herein.

A method of detecting a pattern in an input signal is also disclosed, the method comprising

receiving a multi-bit input signal at a shift register;
over-sampling the multi-bit input signal using the shift register such that each bit of the input signal is represented by a plurality of samples from the shift register;
comparing the target pattern with two or more of the plurality of samples of each bit of the input signal from the shift register;
determining whether or not the input signal matches the target pattern based on the comparison.

There may be provided a computer program, which when run on a computer, causes the computer to configure any apparatus, including a pattern detection unit, detector, circuit, controller, or device disclosed herein or to perform any method disclosed herein.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:

Figure 1 shows an apparatus for communicating with a remote transceiver;
Figure 2 illustrates a pattern detection unit for the remote transceiver circuit of Figure 1.
Figure 3 illustrates an improved pattern detection unit;
Figure 4 illustrates another improved pattern detection unit;
Figures 5a to 5c illustrate three example implementations of sequence detectors for use in the pattern detection unit of Figure 4;
Figure 6 illustrates example contents of a shift register and corresponding match indication signals from the sequence detectors of Figures 5a to 5c; and Figure 7 illustrates a method of detecting a pattern in an input signal.

The system described herein is related but not limited to the wireless communication link between a vehicle and a key for the vehicle. By way of example, the system described herein is related to a wireless communication link between a car and the car key thereof. A car (base station) transmits protocol frames in the low frequency (LF) band and a receiver in the car key receives and decodes the frames. The LF transmission is unidirectional from the car to the keys and it may be complemented with an ultra-high frequency (UHF) transmission from the keys to the car. The LF band (at 125 kHz, for example) which can be useful in a metal environment (as with automobiles) and is relatively insensitive to body detuning (e.g., by touching). The LF receiver in the car key may stay active all of the time, or in a polling mode. Thus current consumption is a concern.

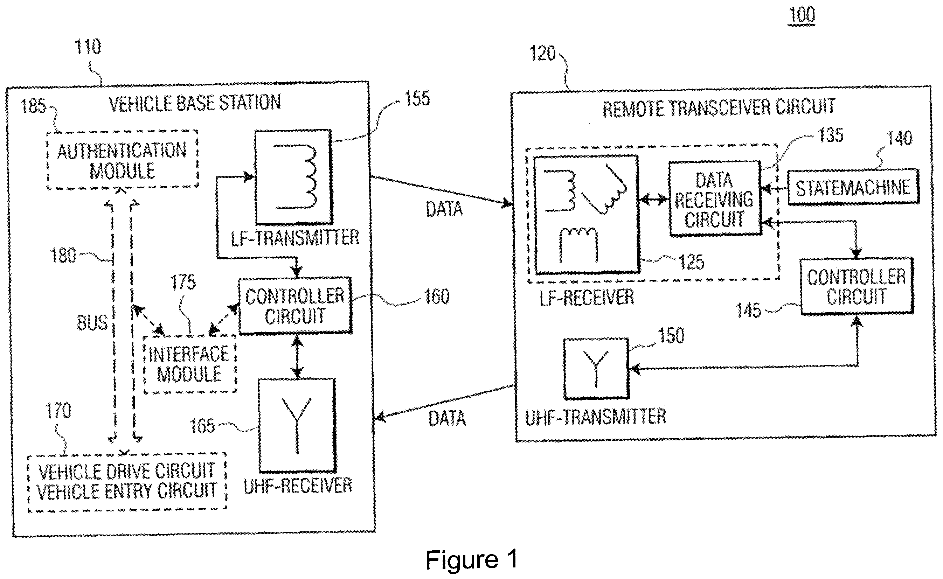

Figure 1 illustrates apparatuses and a system 100 to communicate with remote transceiver circuit 120. The system 100 may include a vehicle base station 110 and a remote transceiver circuit 120. Each of the base station 110, and remote transceiver circuit 120 can be implemented separately. The system 100 can be implemented with the base station 110 and the remote transceiver circuit 120 while the base station 110 is also interacting with another remote transceiver circuit. In these contexts, the remote transceiver circuit 120 may be a PKE and/or PKG type of hand-held device that can be carried by an operator (e.g., in a pocket or handbag).

The vehicle base station 110 includes a transmitter 155, receiver 165 and a controller circuit 160. The transmitter 155 of the vehicle base station 110 may be a low-frequency transmitter, and the receiver 165 of the vehicle base station 110 may be an ultra-high-frequency receiver.

The vehicle base station 110 may utilize a controller circuit 160 to control the transmitter 155 and receiver 165 to communicate signals with remote transceiver circuit 120. Accordingly, the controller circuit 160 may be implemented to facilitate data transmission via the transmitter 155 to communicate with the remote transceiver circuit 120.

The controller circuit 160 of the vehicle base station 110 may delegate authentication of the remote transceiver circuit 120 to an authentication module 185. Accordingly, the controller circuit 160 may generate an output to the interface module 175 containing the response data of the remote transceiver circuit 120 as received by the receiver 165 of the vehicle base station 110. The interface module 175 then communicates the response data to an authentication module 185 via a bus 180. The authentication module 185 processes the response data received from the remote transceiver circuit 120 with stored authentication data. If the remote transceiver circuit 120 is authenticated, the authentication module 185 communicates activation data over the vehicle bus 180, and the activation data allows for the operation of a vehicle drive circuit 170 that facilitates operation of a vehicle drive system in the vehicle.

The remote transceiver circuit 120 may include a receiver 125, a transmitter 150, a controller circuit 145 and a data-receiving circuit 135. The remote transceiver circuit 120 may further include a state machine 140. The receiver 125 of the remote transceiver circuit 120 may be a low-frequency receiver that corresponds to the transmitter 155 of the vehicle base station 110. The transmitter 150 of the remote transceiver circuit 120 may be an ultra-high-frequency transmitter that corresponds to the receiver 165 of the vehicle base station 110.

The remote transceiver circuit 120 utilizes the controller circuit 145 to control the transmitter 150 and receiver 125 for communicating signals with vehicle base station 110.

In use, the controller circuit 160 and transmitter 155 of the vehicle base station 110 poll for the presence of the remote transceiver circuit 120 by periodically transmitting a LF signal. The receiver 125 of the remote transceiver circuit 120 monitors for the presence of the LF signal comprising a particular data pattern. The data-receiving circuit 135 of the remote transceiver circuit 120 comprises a pattern detection unit (not shown). The pattern detection unit is configured to compare a signal from the data-receiving circuit 135 with a target pattern, or a number of target patterns. Each vehicle base station 110 is associated with one or more target patterns that are individual to that vehicle base station 110. When the remote transceiver circuit 120 is within range of the vehicle base station 110, the receiver 125 and data-receiving circuit 135 of the remote transceiver circuit 120 provide the LF signal to the controller circuit 145, which determines whether or not the data pattern in the LF signal matches the target pattern. In response to finding a match, the controller circuit 145 operates the transmitter 150 of the remote transceiver circuit 120 to send an authorisation signal back to the vehicle base station 110.

The state machine 140 of the remote transceiver circuit 120 facilitates on and off modes of the data-receiving circuit 135.

The embodiment shown in Figure 1 may be implemented to conserve power using one or more approaches as described herein. In addition, one or more embodiments may be implemented with transceiver circuits used in vehicle applications, such as PKE applications, such as with single chip keyless entry transceivers employing a RISC controller. The RISC controller may be powered with an ISO 14443 type A interface. In other embodiments, the remote transceiver circuit may implement a controller with a built-in UHF transmitter or a transmitter with a separate controller.

A passive keyless entry (PKE)/passive keyless go (PKG) receiver described herein may make use of several integrated circuit devices that include a fully integrated single-chip solution combining remote keyless entry (RKE), PKE and immobilizer (IMMO) functionality designed for use in automotive environments.

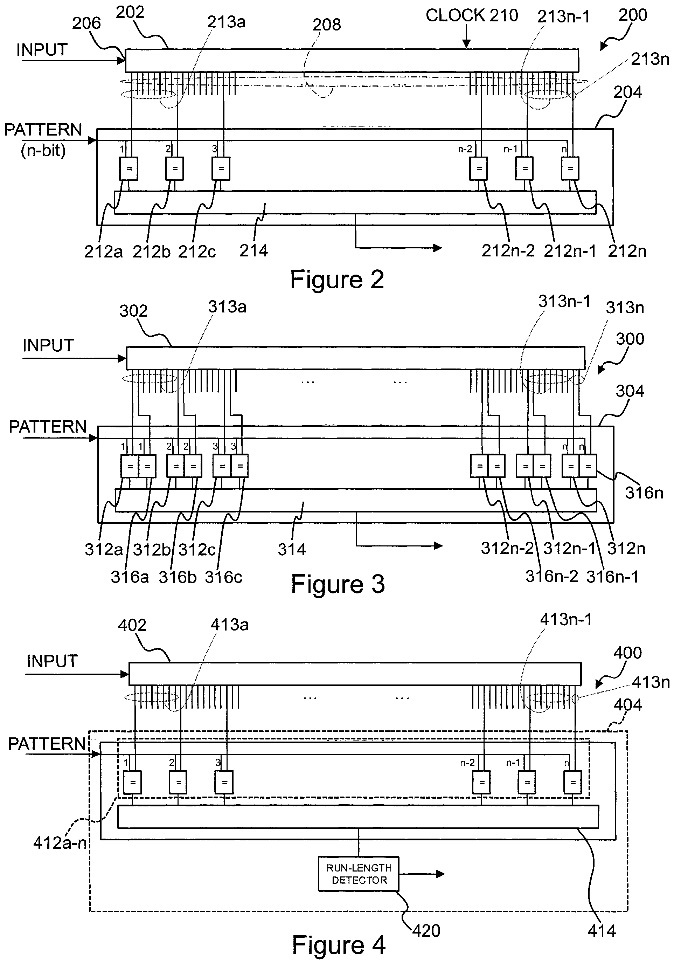

Figure 2 illustrates a pattern detection unit 200 for the data-receiving circuit of the remote transceiver circuit described above with reference to Figure 1. The pattern detection unit 200 comprises a shift register 202 and a correlator 204.

The shift register 202 has a data input terminal 206 and a plurality of sample registers (not shown). The shift register 202 is configured to over-sample an n-bit input signal such that each bit of the input signal is loaded into the shift register 202 a plurality of (m) times. In this way, each bit can be represented by a plurality of m-samples as it passes through the shift register. Each bit may be considered to provide a separate symbol.

The sample registers operate in a conventional manner such that the n-bit input signal is received as a serial communication at the data input terminal 206. During operation, the input signal received at the data input terminal 206 is sequentially shifted through the sample registers in the shift register 202 in response to each pulse in a clock cycle. The shift register 202 has a clock frequency 210 that is m times the sample frequency of the input signal at the data input terminal 206 in order to oversample the input signal. A train of m-samples is therefore generated for each bit of the input signal as it enters the shift register. The train of m-samples therefore progresses sequentially through the sample registers in the shift register.

The sample registers can be considered to be grouped together in sample-register-groups, with each sample-register-group comprising one or more sample registers. The first sample-register-group 213a to the n-1$^{th}$ sample-register-group 213n-1 contain m sample registers such that the full batch of m samples can be passed on to the next sample-register-group in the shift register 202. The n$^{th}$ (last) sample-register-group 213n includes at least one sample register. In this example, the n$^{th}$ (last) sample-register-group 213n includes a single sample register because only one signal from the n$^{th}$ sample-register-group 213n needs to be processed by the correlator 204, and because there are no subsequent sample-register-groups for the samples to be passed on to.. The shift register 202 therefore comprises (n-1)*m+1 sample registers. The sample registers in each sample-register-group are contiguous with the sample registers in neighbouring sample-register-groups. Each sample register has a separate output terminal 208 in this example.

The correlator 204 comprises a plurality of bit comparison units 212a-n and a code comparison unit 214. An output terminal from one sample register in each sample-register-group is connected to a first input terminal of an associated bit comparison unit 212a-n. The selected sample registers are spaced apart by m-samples, in this example. For instance, the output terminal of the first sample register of each sample-register-group is connected to the first input terminal of a respective bit comparison unit 212a-n. A second input terminal of each bit comparison unit 212a-n is configured to receive a bit-value of an n-bit target pattern corresponding to the respective sample-register-group associated with the bit comparison unit 212a-n. For example, the first bit of the target pattern is compared with a sample from the first sample-register-group, and the n$^{th}$ bit of the target pattern is compared with a sample from the n$^{th}$ sample-register-group. In this way, each bit comparison unit 212a-n is able to compare one sample of a particular bit-value in the shift register with a corresponding bit-value of the target pattern and provide a bit-comparison value at an output terminal of the bit comparison unit 212a-n. The bit-comparison value indicates whether or not a particular sample matches a corresponding bit-value of the target pattern.

The code comparison unit 214 has an output terminal and a plurality of input terminals connected to respective output terminals of the plurality of bit comparison units 212a-n. The code comparison unit 214 is configured to receive the bit-comparison values from each of the bit comparison units 212a-n and determine whether, overall, the plurality of samples (from one in every sample-register-group in the shift register) matches the target pattern. The code comparison unit 214 may be implemented by a multi-input AND gate and each bit comparison unit 212a-n may be implemented by an XNOR gate. An alternative implementation can use an adder instead of the AND gate. The adder output is compared against a threshold of a minimum number of samples that should match. If the adder output is greater than or equal this threshold a match is reported. This mechanism can be used to support error tolerance, e.g. to allow a successful match, even if one or two samples are destroyed by an interferer or by noise. As a further alternative, the code comparison unit 214 may be implemented by a multi-input NOR gate and each bit comparison unit 212a-n may be implemented by an XOR gate.

The effect of over-sampling the data is that the correlator has m attempts to determine a match for each bit. In this way, the failure to identify a match due to corruption of a sample can be avoided or reduced and so the sensitivity of the system is improved.

In this way, the correlator 204 is configured, using the bit comparison units 212a-n, to compare a target pattern to a sample of each bit of the input signal in the shift register 202, and, using the code comparison unit 214, to determine whether the input signal matches the target pattern based on the comparison.

If a data stream is presented at the data input terminal 206 by a data receiving circuit, the correlator 204 indicates a match only if the incoming data stream is equal to the target pattern (a wanted bit pattern or wake-up pattern). In all other cases it does not signal a match.

If no input signal is present, the correlator 204 is fed with noise samples from the receiver front-end. These noise samples are uncorrelated. Due to counting statistics, it is possible that the noise from the receiver front end exactly matches the wanted bit pattern, which results in the correlator 204 signalling a match. Such an event is called a false alarm, as the correlator 204 signals a match even though there was no wanted input signal.

Returning to Figure 1, when a target pattern is identified in the received input signal, the data receiving circuit 135 of the remote transceiver circuit 120 may start the controller circuit 145 to process the received data stream to, for example, check encryption information. The micro-controller system requires much more current than the LF active receiver 125 alone. If the device is woken up by a false alarm, the remote transceiver circuit 120 consumes energy unnecessarily. This is undesirable, especially for a car key, in which excellent energy management is required because the device is ideally operated with a single battery for many years.

The average false alarm rate (FAR) for a correlator such as that described with reference to Figure 2 with n-bits can be calculated according to the following equation (assumption: binary input values with normal distribution, equi-probable 1's & 0's, uncorrelated samples, and 1 sample per bit):

$$FAR \propto \frac{1}{2^n}$$

One option for improving (reducing) the false alarm rate is therefore to increase the number of bits (n) in the target pattern. However, in order to minimize power consumption by the vehicle base station, and so maintain the battery of the vehicle, there is a conflicting requirement to minimize the number of bits in the target pattern and so decrease the length of the LF polling signal that is periodically transmitted by the vehicle. A polling system transmitting 24-32 bit patterns typically drains a car battery in 2 weeks, but produces acceptable performance at the car key. It is desirable for the target pattern to be reduced to 8, 10 or 12 bits, or fewer, for example, in order for the duration of the car battery to be improved. However, in one example, 100 false alarms per hour were detected by a car key using the pattern detection unit of Figure 2 when the target pattern was reduced to a 7 bit pattern. Such a rate of false alarms causes unacceptably high power loss by the key.

Another way to improve (reduce) the false alarm rate of the pattern matching unit is to increase the number of samples for a target pattern with a given number of bits. This means a significant reduction for the false alarm rate as can be seen in the following equation (assumption: binary input values with normal distribution, equi-probable 1's & 0's, uncorrelated samples, and 2 samples per bit):

$$FAR \propto \frac{1}{2^{2n}}$$

This improvement in false alarm rate comes at the cost of a higher required signal to noise ratio for the LF-receiver 125, which reduces the effective sensitivity. However, if this sensitivity reduction is acceptable for the application, then this method may be used to reduce the false alarm rate. The loss in sensitivity is proportional to the number of samples used per bit.

Figures 3 and 4 illustrate improved pattern detection units 300, 400 in which the numbers of samples per bit is increased. The pattern detection units 300, 400 differ from that described above with respect to Figure 2 in that they each comprise a correlator that is configured to compare a target pattern and two or more of the plurality of samples of each bit of the input signal from the shift register, and to determine whether the input signal matches the target pattern based on the comparison.

The specific arrangements of the pattern detection units 300, 400 are discussed separately below with respect to Figures 3 and 4.

Regarding Figure 3, the pattern detection unit 300 differs from that described previously with reference to Figure 2 in that the correlator 304 comprises a first plurality of bit comparison units 312a-n and a second plurality of bit comparison units 316a-n. The first and second bit comparison units 312a-n, 316a-n are arranged in pairs such that each first bit comparison unit 312a-n is associated with a corresponding second bit comparison unit 316a-n. Each pair of bit comparison units 312a-n, 316a-n compares, in parallel, two different samples in a particular sample-register-group 313a-n in the shift register 302 with a particular bit-value of the target pattern. The effect of the arrangement is that, for the majority of the time (a factor of (m-1)/m), the pair of bit comparison units 312a-n, 316a-n processes, in parallel, two different samples associated with the same bit. In this way, the two different samples are compared with a particular bit-value of the target pattern.

In this example, a first set of samples comprises a sample taken from every sample-register-group. The first set of samples is provided to first input terminals of respective first bit comparison units 312a-n. A second input terminal of each first bit comparison unit 312a-n is configured to receive a respective bit-value of the n-bit target pattern. In this way, each one of the first bit comparison units 312a-n is able to compare one sample of a particular sample-register-group in the shift register with a corresponding bit-value of the target pattern and provide a bit-comparison value at an output terminal. A second set of samples comprises another sample taken from every sample-register-group. The second set of samples is provided to first input terminals of respective second bit comparison units 316a-n. The first and second sets of samples provide pairs of samples from each sample-register-group. The first set of samples comprises different samples to the second set of samples. A second input terminal of each second bit comparison unit 316a-n is configured to receive a respective bit-bit value of the n-bit target pattern. In this way, each one of the second bit comparison units 312a-n is also able to compare one sample from a particular sample-register-group in the shift register with a corresponding bit-value of the target pattern and provide a bit-comparison value at an output. The bit-comparison values indicate whether a sample matches a corresponding bit-value of the target pattern.

The code comparison unit 314 has an output terminal and a plurality of input terminals connected to outputs of the respective first and second pluralities of bit comparison units 312a-n, 316a-n. The code comparison unit 314 is configured to receive the bit-comparison values from each of the bit comparison units 312a-n, 316a-n and determine a match indication signal that is indicative of whether, overall, the first and second sets of samples (two samples in every sample-register-group) match the target pattern.

In this way, the correlator is configured to compare the target pattern to one of the plurality of samples from each sample-register-group and, also, to compare the target pattern to another of the plurality of samples from each sample-register-group in order to compare the target pattern and two of the plurality of samples of each bit in the shift register. For example, the first bit of the target pattern is compared with the first and second samples from the first sample-register-group 313a, and the $n^{th}$ bit of the target pattern is compared with the first and second samples from the $n^{th}$ sample-register-group 313n, etc. The shift register 302 and correlator 304 may operate with a synchronised clock cycle. The correlator is therefore able to, in one clock cycle, compare a target pattern with two or more of the plurality of samples of each bit. As the input signal is shifted through the shift register 302, the samples compared by the correlator 304 evolve from cycle to cycle.

In this example, the two samples compared by each pair of bit comparison units 312a-n, 316a-n are consecutive samples in a sample-register-group. This can provide particularly good performance in the presence of interference or a noise signal. Alternatively, the two samples compared by each pair of bit comparison units 312a-n, 316a-n could be nonconsecutive samples.

The shift register 302 of the pattern detection unit 300 differs from that described previously with reference to Figure 2 in that the $n^{th}$ (last) sample-register-group 313n includes two sample registers instead of the one that is in Figure 2. Therefore, the shift register 302 of Figure 3 comprises (n-1)*m+2 sample registers in order to hold (n-1)*m+2 samples of n-bits. Again, each bit of the input signal is oversampled by a factor m.

The pairs of bit comparison units 312a-n, 316a-n of Figure 3 are examples of a set of bit comparison units that comprises a plurality of bit comparison units. In other examples, the set of bit comparison units may comprise three or more bit comparison units for each sample-register-group 313. Each bit comparison unit in a set may compare respective samples from a sample-register-group with a particular bit-value of the target pattern.

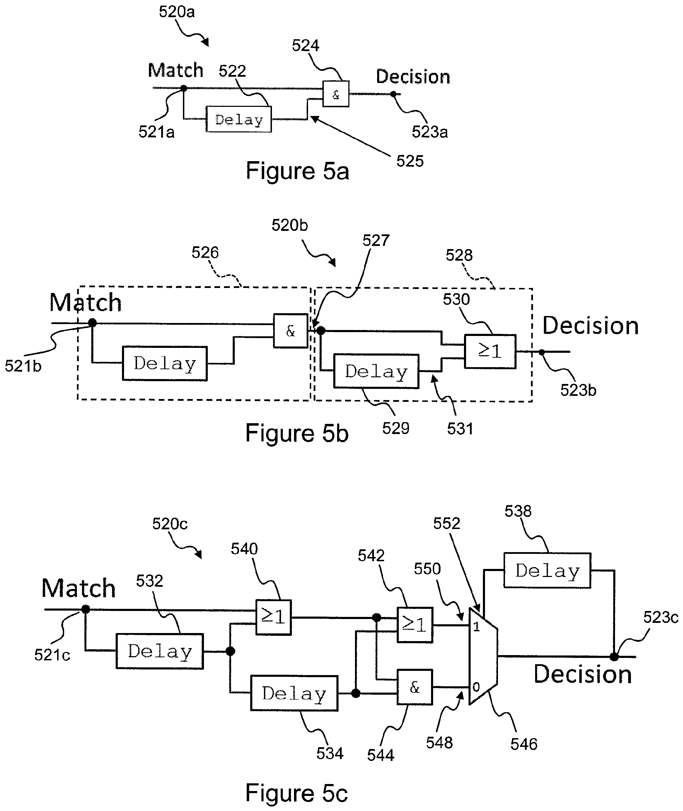

Regarding Figure 4, the pattern detection unit 400 comprises a shift register 402, bit comparison units 412a-n and a code comparison unit 414 that are similar to those described previously with reference to Figure 2. The $n^{th}$ (last) sample-register-group 313n includes a single sample register. The pattern detection unit 400 differs from that described with reference to Figure 2 in that the correlator 404 further comprises a sequence detector 420, which may also be referred to as a run-length detector. Example implementations of the sequence detector are discussed below with reference to Figures 5a to 5c.

Returning to Figure 4, the sequence detector 420 is configured to determine whether the input signal matches the target pattern based on a plurality of match indication signals from the code comparison unit 414. The plurality of match indication signals may be determined for consecutive, or different, clock cycles.

In this way, the correlator 404 is configured to compare the target pattern with one of the plurality of samples of each bit and, subsequently, to compare the target pattern to another of the plurality of samples of each bit. Therefore, the correlator 404 can compare the target pattern with two of the plurality of samples of each bit from the shift register. The shift register 402 and correlator 404 may operate with a synchronised clock cycle. The correlator is therefore able to, in one clock cycle, compare the target pattern with a first of the plurality of samples that is representative of each bit and, in a subsequent clock cycle, to compare the target pattern with a second of the plurality of samples that is representative of each bit. In this way, the correlator 404 can determine whether or not the input signal matches the target pattern based on such comparisons for two or more clock cycles.

The pattern detection unit 400 of Figure 4 provides an efficient way to achieve the same or similar effect to the pattern detection unit of Figure 3, but with almost no additional hardware effort when compared with Figure 2. Instead of duplicating the number of bit comparison units in the correlator 404, the match indication signal that is provided as an output signal of the code comparison unit 414 is processed multiple times with a sequence, or run-length, detector 420. In this example, a pattern match is only signalled if the match indication signal that is provided by the code comparison unit correlator determines a match for 2 consecutive cycles.

In both the examples described above with reference to Figures 3 and 4, a match may be determined by the correlator 304; 404 in response to each bit of the target pattern matching all of the plurality of samples of a corresponding bit-value of the input signal from the shift register. In Figure 3, the plurality of sample-values are processed in parallel using information stored in a plurality of sample registers in each sample-register-group. In Figure 4, the plurality of sample-values are processed sequentially, over time, using information stored in a single sample register in each sample-register-group.

The correlator 304; 404 may be configured to compare the target pattern to consecutive samples in the shift register of each bit of the input signal. This can simplify operation of the device.

The correlator 304; 404 may be configured to compare the target pattern to only two (rather than more than two) of the plurality of samples of each bit of the input signal in the shift register. This has been found to provide a good trade-off between reduced sensitivity and a decrease in false wake-up events for some car key applications.

The pattern detection unit 300; 400 may optionally comprise a memory for storing the target pattern. In such examples, the memory is operatively connected to the correlator 304; 404 for providing the target pattern to the correlator 304; 404.

A further advantage of the pattern detection units 300; 400 of Figures 3 and 4 is the possibility to switch between a first-mode-of-operation and a second-mode-of-operation. The first-mode-of-operation may be a reduced-false-alarm-rate mode of operation, which can provide the functionality described with reference to Figure 3 or 4. The second-mode-of-operation may be a standard mode of operation, which can provide the functionality described with reference to Figure 2. In this way, in the first-mode-of-operation, the correlator is configured to compare the target pattern with two or more of the plurality of samples of each bit of the input signal from the shift register in order to determine whether the input signal matches the target pattern. In the second-mode-of-operation, the correlator is configured to compare a target pattern with only one of the plurality of samples of each bit of the input signal from the shift register in order to determine whether the input signal matches the target pattern.

The pattern detection units 300; 400 of Figures 3 and 4 may include a controller (not shown) that can set the mode of operation. The controller can set the mode of operation based on user input, for example when configuring the pattern detection unit, or can be set automatically based on pattern length, as discussed below. The controller may also be configured to select one of a plurality of target patterns for matching. For example, if multiple target patterns are to be used, then the pattern detection unit 300, 400 can include one correlator 304, 404 per pattern, such that the multiple correlators share a common shift register 302, 402. The controller (not shown) can enable one or more of the multiple different target patterns based on a use case (e.g. one pattern for PKE and one for PKG).

This functionality can allow a device that includes the pattern detection unit of Figure 3 or 4 to be configured according to its particular requirements, either in: (i) the standard mode-of-operation with a higher false wake-up rate but excellent sensitivity, or (ii) the reduced-false-alarm-rate mode of operation with improved false wake-up rate and moderate sensitivity loss. This functionality can be particularly beneficial if the wake-up pattern length is configurable, and multiple wake-up patterns are supported simultaneously by the pattern detection unit. In this way it can be possible to activate the false wake-up improvement only for one very short wake-up pattern, while at the same, another longer wake-up pattern can be searched with full sensitivity. That is, a pattern detection unit can apply the first-mode-of-operation for a first instance of a wake-up pattern, and can apply the second-mode-of-operation for a second instance of a wake-up pattern

Another method for reducing false wake up events is to use a signal monitor to assess whether a reasonably strong signal is available before a wake-up pattern matching process is started, for example by a pattern detection unit. However, such kind of signal strength indicators may result in a loss in sensitivity and they are prone to interferers. Furthermore, such a signal strength indicator might require a specific protocol (e.g. an unmodulated burst signal in front of the protocol) for reliable detection, and can consume a large amount of current. Advantageously, the use of a pattern detection unit such as that described with reference to Figure 3 or Figure 4 results in improved implementation simplicity, configurability and sensitivity loss compared to a system that uses a signal monitor.

Figures 5a to 5c illustrate three example implementations of sequence detectors for use in the pattern detection unit of Figure 4. Each sequence detector 520a; 520b; 520c has an input terminal 521a; 521b; 521c and an output terminal 523a; 523b; 523c. The input terminal 521a; 521b; 521c of each sequence detector 520a; 520b; 520c is configured to receive a match indication signal from the code comparison unit. An output signal at the output terminal 523a; 523b; 523c of each sequence detector 520a; 520b; 520c is indicative of whether the input signal matches the target pattern.

Figure 5a illustrates a sequence detector 520a that comprises a delay buffer 522 and an AND gate. The delay buffer 522 is configured to receive the match indication signal from the code comparison unit and to provide a buffered match indication signal 525. In this example, the delay buffer 522 applies a time delay that corresponds to the over-sampling frequency that is applied by the shift register (not shown). Therefore, the buffered match indication signal 525 is a delayed version of the match indication signal received at the input terminal 521a.

The AND gate has a first input terminal, a second input terminal and an output terminal. The first input terminal of the AND gate is configured to receive the match indication signal from the code comparison unit. The second input terminal of the AND gate unit is configured to receive the buffered match indication signal from the delay buffer 522. The output terminal of the AND gate is connected to the output terminal 523a of the sequence detector 520a. The effect of the sequence detector 520a is that the output signal 523a is only set to a value that is indicative of a match if the pattern is successfully matched for two consecutive samples. In this way, false alarm signals, in which a single set of samples matches, are ignored.

Figure 5b illustrates a sequence detector 520b that comprises first and second sequence detector blocks 526, 528. The first sequence detector block 526 is similar to the sequence detector 520a described with reference to Figure 5a such that a first-block-output-signal 527 of the first sequence detector block 526 is only set to a '1' if the pattern is successfully matched for two consecutive samples.

An input terminal of the second sequence detector block 528 is connected to the first sequence detector block 526 such that it receives the first-block-output-signal 527. The second sequence detector block 528 comprises a delay buffer 529 and an OR gate 530. The delay buffer 529 is configured to receive the first-block-output-signal 527 and to provide a buffered-first-block-output-signal 531. In this example, the delay buffer 529 applies a time delay that corresponds to the over-sampling frequency that is applied by the shift register (not shown). Therefore, the buffered-first-block-output-signal 531 is a delayed version of the first-block-output-signal 527. The OR gate 530 receives the buffered-first-block-output-signal 531 and the first-block-output-signal 527 as input signals. An output terminal of the OR gate 530 is connected to the output terminal 523b of the sequence detector 520b.

The sequence detector 520b of Figure 5b filters out single matches but maintains the "match count" (or "width") of multiple matches so that the signal provided at the output terminal 523b matches the number of cycles that would be obtained for a positive identification using the pattern detection unit of Figure 2. This can be important in receivers where the shape of the post-processed match signal (or "wakeup decision") is important in the subsequent signal processing.

In this way, the sequence detector 520b sets an output signal (provided at the output terminal 523b) as a matching-value ('1') in response to two consecutive match indication signals being indicative of the input signal matching the target pattern. The sequence detector 520b maintains the output signal as the matching-value ('1') for the same number of consecutive clock cycles that the match indication signals are indicative of the input signal matching the target pattern.

Figure 5c illustrates a sequence detector 520c that comprises a first delay buffer 532, a second delay buffer 534, a third delay buffer 538, a first OR gate 540, a second OR gate 542, an AND gate 544 and a multiplexor 546.

The multiplexor 546 has a first input terminal 548, which receives a first input signal indicative of the result of: (a match for the earliest comparison) AND (a match for one or more of a plurality of later comparisons). In this example, the plurality of later comparisons comprise two later comparisons. For an $n^{th}$ comparison, this can be expressed as: $(n-2)$ AND $((n-1)$ OR $n)$.. The multiplexor 546 also has a second input terminal 550, which receives a second input signal indicative of whether or not a match has been identified for at least one of: a current comparison, and one of a plurality of earlier comparisons). In this example, the plurality of earlier comparisons again comprises two earlier comparisons. For an $n^{th}$ comparison, this can be expressed as: $n$ OR $(n-1)$ OR $(n-2)$.

The output signal of the multiplexor 546 is provided as a feedback signal to a control terminal 552 of the multiplexor 546 via the third delay buffer 538. In this way, the output signal of the sequence detector 520c controls which of the input signals provided to the multiplexor 546 is provided as an output signal of the multiplexor, and in turn an output signal of the sequence detector 520c. When the output signal of the multiplexor 546 is low, the first input terminal 548 is connected to the output terminal of the multiplexor 546. In this way, the signal at the first input terminal 548 is used to trigger the start of an identified match. When the output signal of the multiplexor 546 is high following the identification of a match, the second input terminal 550 is connected to the output terminal of the multiplexor 546. In this way, the signal at the second input terminal 550 is used to control the duration with which the output signal of the sequence detector 520c is maintained high.

The sequence detector 520c can therefore recognize, or compensate for, a "gap in the middle" situation in which a sequence of matching samples appears to contain a sample in which a match is not present due to corruption of the signal.

It will be appreciated that other approaches also possible, for example to provide a minimum (yet variable) latency.

In this way, the sequence detector 520c sets an output signal (provided at the output terminal 523c) as a matching-value ('1') in response to two or more match indication signals from a group-of-match-indication-signals being indicative of the input signal matching the target pattern. The group-of-match-indication-signals includes a plurality of, or three or more, match indication signals. In the example of Figure 5c, the group-of-match-indication-signals includes three match indication signals. The sequence detector 520c then maintains the output signal as the matching-value ('1') for the number of clock cycles that are represented by the group-of-match-indication-signals.

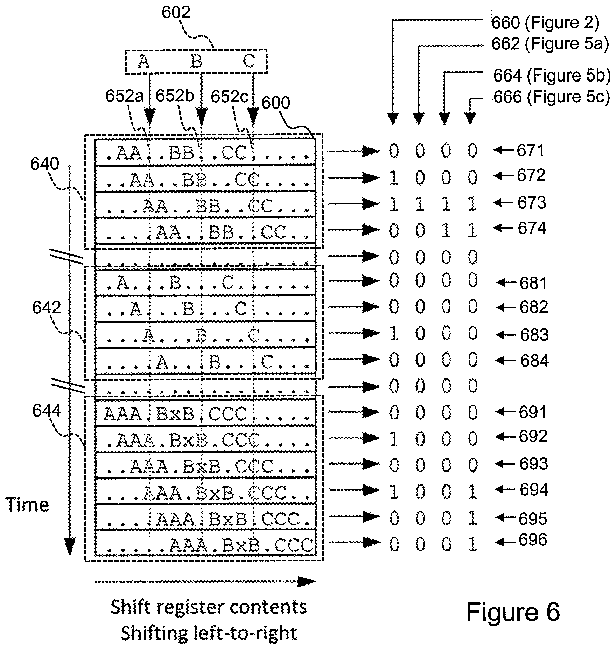

Figure 6 illustrates, on the left hand side, a timing diagram table representative of example sample-values that pass through a shift register 600. The example sample-values are based on input signals that are indicative of one of 3 different scenarios, as discussed below. A truth table illustrating respective output values 660, 662, 664, 666 for the sequence detectors discussed above with reference to Figures 5a to 5c is also illustrated in Figure 6, on the right-hand side. An output value 660, 662, 664, 666 is set as '1' if a match is found, and set as '0' if a match is not found.

The input signals relate to: (i) a normal alarm condition 640, in which a train of samples correctly match a target pattern 602, (ii) a false alarm condition 642, in which a single sample happens to match the target pattern 602 due to statistical noise, and (iii) an alarm condition that is partly corrupted by noise 644, in which an input signal is received that matches the target pattern 602, although some samples are corrupted.

For each respective scenario 640, 642, 644, each row of the table illustrates the contents of the shift register 600 at a particular clock cycle. An oversampling ratio of 4 is used, and the wake-up pattern has a reduced length of three bits (sequence A,B,C) for brevity. A dot in the signal represents any random/unknown bit value. Subsequent clock cycles are illustrated as subsequent rows. As can be seen by comparing the data in the rows, the contents of the shift register 600 are shifted from left to right incrementally with each clock cycle for each scenario 640, 642, 644.

Three active-sample-registers 652a-c are identified at spaced apart locations in the shift register 600. Each of these active-sample-registers 652a-c represent a sample register in a sample-register-group that provides an output for processing by a code comparison unit. As will be appreciated from the description of Figures 2 and 5a to 5c, the information in these active-sample-registers 652a-c is used to determine the respective output values 660, 662, 664, 666.

The output values 660, 662, 664, 666 shown in Figure 6 are as follows:

the first column of output values 660 are representative of the output of the match detection unit of Figure 2;
the second column of output values 662 are representative of the output of the match detection unit of Figure 4 using the sequence detector of Figure 5a;
the third column of output values 664 are representative of the output of the match detection unit of Figure 4 using the sequence detector of Figure 5b; and
the fourth column of output values 666 are representative of the output of the match detection unit of Figure 4 using the sequence detector of Figure 5c.

**Normal Alarm Condition**

For the input signal indicative of a normal alarm condition 640, the input signal progresses through the shift register with multiple successive samples indicative of each bit. The state of the shift register 600 for four sequential clock cycles, or time steps 671-674, of the normal alarm condition 640 are illustrated.

In the second time step 672, the sample-values in the active-sample-registers 652a-c match the target pattern 602. Therefore, the output of the match detection unit of Figure 2 is set as a '1' to indicate a match, as shown in column 660.

In the third time step 673, the sample-values in the active-sample-registers 652a-c again match the target pattern 602. Therefore, the output of the match detection unit of Figure 2 is still set as a '1' to indicate a match, as shown in column 660. Also, since this is the second immediately consecutive time step in which the contents of the active-sample-registers 652a-c matches the target pattern 602, the outputs of the sequence detectors of Figures 5a, 5b and 5c are also set as a '1' to indicate a match, as shown in columns 662, 664, 666.

In the fourth time step 674, the sample-values in the active-sample-registers 652a-c no longer match the target pattern 602. Therefore, the output of the match detection unit of Figure 2 and the sequence detector of Figure 5 are set as a '0' to indicate that there is not a match, as shown in columns 660 and 662. However, the outputs of the match detection units of Figures 5b and 5c are maintained as a '1' to indicate a match, as shown in columns 664, 666. In this way, the length of time that the outputs of the match detection units of Figures 5b and 5c are kept as '1' corresponds to the number of consecutive clock cycles for which a match between the values in the active-sample-registers 652a-c and the target pattern 602 was detected.

**False Alarm Condition**

For the input signal indicative of a false alarm condition 642, a single instance of a matching code passing through the shift register 600. This matching code may be present in the shift register 600 due to statistical effects. The state of the shift register 600 for four sequential clock cycles, or time steps 681-684, of the false alarm condition 640 are illustrated.

The pattern matching unit of Figure 2 identifies a match at a third time step 683 when the contents of the active-sample-registers 652a-c in the shift register 600 matches the target pattern 602, as shown in column 660. None of the sequence detectors of Figures 5a to 5c detect a match because there are not two successive time steps in which the contents of the active-sample-registers 652a-c match the target pattern 652. This is shown in columns 662, 664 and 666. Therefore, in contrast to the processing by the match detection unit of Figure 2 (column 660), the match detection units of Figures 5a to 5c (columns 662, 664, 666) do not raise a false alarm for the set of signals identified with reference 642.

**Corrupted Alarm Condition**

For the input signal indicative of an alarm condition partly corrupted by noise 644, the input signal progresses through the shift register 600 with four successive samples indicative of each bit, in which one of the samples has been effected by noise 'x'. The state of the shift register 600 for six sequential time steps 691-696 of the alarm condition partly corrupted by noise 644 are illustrated. This is a case where a valid wakeup should be determined because the input signal nearly matches the target pattern 602 for three consecutive time steps, expect one sample is corrupted due to noise.

The pattern matching unit of Figure 2 identifies that the contents of the set of sample registers 652a-c in the shift register 600 matches the target pattern 602 in the second and fourth time steps 692, 694, but not the third time step 693, in which the sample-value in one of the active-sample-registers 652a-c is corrupted. This is shown in column 660 of Figure 6.

The sequence detectors of Figures 5a and 5b fail to detect a match due to the noise present in the signal in the third time step 693, as shown in columns 662 and 664. This is because a match is not detected for two consecutive time steps.

The sequence detector of Figure 5c indicates a match condition in the third to sixth time steps 693-696 in response to the contents of the active-sample-registers 652a-c in the shift register 600 matching the target pattern 602 in the second and fourth time steps 692, 694, which are separated by the third time step 693 in which the samples in the active-sample-registers 652a-c are corrupted by noise. This is shown in column 666. The match detection unit of Figure 5c can correctly identify a match in a noisy input signal because the processing for two out of three consecutive time steps identify a match. Also, the match detection unit of Figure 5c can set the length of time that the output of the match detection units is kept as '1' such that it corresponds to the number of consecutive clock cycles for which a match between the values in the active-sample-registers 652a-c and the target pattern 602 is likely to have occurred.

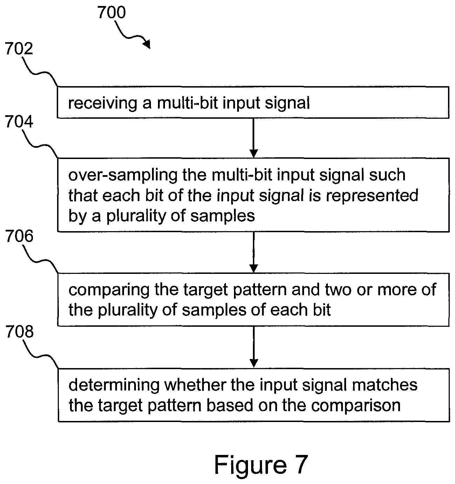

Figure 7 illustrates a method 700 of detecting a pattern in an input signal, which can be performed using the pattern match detector described previously with reference to Figure 3 and Figure 4. The method 700 comprises receiving 702 a multi-bit input signal at a shift register. The received multi-bit input signal is over-sampled 704 using the shift register such that each bit of the input signal is represented by a plurality of samples in the shift register. A target pattern is compared 706 with two or more of the plurality of samples of each bit of the input signal in the shift register. The two or more of the plurality of samples can be processed in the same clock cycle, using two sample registers within each group of sample registers, as discussed with reference to Figure 3. Alternatively, the two or more of the plurality of samples can be processed using the output of a single sample register within each group of sample registers, over two clock cycles, as discussed with reference to Figure 4. Based on the comparison, the method determines 708 whether the input signal matches the target pattern.

The systems and methods described above may, in general, be applied to all wired or wireless communication protocols, including biphase code. Biphase coding adds a level of complexity to the coding process but in return includes a way to transfer a frame data clock that can be used in decoding to increase accuracy. In biphase coding there may be a state transition in the message signal of every bit frame. This allows a demodulation system to recover the data rate and also synchronize to bit edge periods. With this clock information, the data stream can be recreated.

Manchester coding, which is a type of biphase coding, provides a means of adding the data rate clock to the message to be used on the receiving end. Manchester coding provides the added benefit of yielding an average DC level of 50%. This has positive implications in the demodulator's circuit design as well as managing transmitted RF spectrum after modulation. This means that in modulation types where the power output is a function of the message such as amplitude modulation (AM), the average power is constant and independent of the data stream being encoded.

Manchester coding states that there will be a transition of the message signal at the mid-point of the data bit frame. What occurs at the bit edges depends on the state of the previous bit frame and does not have to produce a transition. A logical "1" is defined as a mid-point transition from low to high and a "0" is a mid-point transition from high to low.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

**Claims**

1. An automotive access system transceiver (120), the transceiver (120) comprising:

   a receiver (125) for receiving a multi-bit input signal;
   a data-receiving circuit (135);
   a transmitter (150); and
   a control circuit (145) to control the transmitter (150) and receiver (125) for communicating signals with a vehicle base station (110),
   wherein the data-receiving circuit (135) comprises a pattern detection unit (300; 400) configured to compare the multi-bit input signal with a target pattern associated with a vehicle base station, wherein the pattern detection unit (300; 400) comprises:

   a shift register (302; 402) configured to over-sample the multi-bit input signal such that each bit of the input signal is represented by a plurality of samples in the shift register (302; 402); and
   a correlator (304; 404) configured to compare the target pattern with two or more of the plurality of samples of each bit from the shift register (302; 402) in order to determine whether or not the input signal matches the target pattern,

   wherein the controller is configured, in response to finding a match between the input signal and the target pattern, to operate the transmitter (150) of the remote transceiver circuit (120) to send an authorisation signal to the vehicle base station (110).

2. The transceiver (120) of claim 1 in which the correlator (304; 404) is configured to determine a match in response to each bit of the target pattern matching all of the two or more samples of a corresponding bit-value from the shift register (302; 402).

3. The transceiver (120) of claim 1 or claim 2 in which the correlator (304; 404) is configured to compare the target pattern to consecutive samples from the shift register (302; 402) of each bit of the input signal.

4. The transceiver (120) of any preceding claim in which the correlator (304) is configured to compare the target pattern with one of the plurality of samples of each bit and, in parallel, to compare the target pattern with another of the plurality of samples of each bit in order to compare the target pattern to the two or more samples of each bit.

5. The transceiver (120) of claim 4 in which the correlator (304) comprises:

   a first plurality of bit comparison units (312a-n), each bit comparison unit (312a-n) configured to compare one sample of a particular bit from the shift register (302) with a corresponding bit-value of the target pattern and determine a first bit-comparison value based on the comparison;
   a second plurality of bit comparison units (316a-n), each bit comparison unit configured to compare another sample of the particular bit from the shift register (302) with a corresponding bit-value of the target pattern and determine a second bit-comparison value based on the comparison; and
   a code comparison unit (314) configured to process the first and second bit-comparison values in order to determine a match indication signal that is representative of whether or not the input signal matches the target pattern for a single clock cycle.

6. The transceiver (120) of any one of claims 1 to 3 in which the correlator (404) is configured to compare the target pattern with one of the plurality of samples of each bit and, subsequently, to compare the target pattern to another of the plurality of samples of each bit in order to compare the target pattern to the two or more samples of each bit.

7. The transceiver (120) of claim 6 in which the correlator (404) comprises:

   a plurality of bit comparison units (412a-n), each bit comparison unit configured to compare one sample of a particular bit from the shift register (402) with a corresponding bit-value of the target pattern and determine a bit-comparison value based on the comparison;
   a code comparison unit (414) configured to process the bit-comparison values in order to determine a match indication signal that is representative of whether or not the input signal matches the target pattern for a single clock cycle; and
   a sequence detector (420) configured to determine whether the input signal matches the target pattern based on two or more match indication signals provided by the code comparison unit (414) for different clock cycles.

8. The transceiver (120) of claim 7 in which the two or more match indication signals are provided by the code comparison unit (414) for consecutive clock cycles.

9. The transceiver (120) of claim 7 or claim 8 in which the sequence detector (420) comprises:

   a buffer configured to receive the match indication signal of the code comparison unit (414) and provide a buffered match indication signal; and
   an AND unit having a first input terminal, a second input terminal and an output terminal, in which the first input terminal is configured to receive the match indication signal of the code comparison unit (414), the second input terminal is configured to receive the buffered match indication signal from the buffer.

10. The transceiver (120) of claim 7 in which the sequence detector (420) is configured to
    provide an output signal;
    set the output signal as a matching-value in response to two consecutive match indication signals being indicative of the input signal matching the target pattern; and
    maintain the output signal as the matching-value for the same number of consecutive clock cycles that the match indication signals are indicative of the input signal matching the target pattern.

11. The transceiver (120) of claim 7 in which the sequence detector (420) is configured to
    provide an output signal;
    set the output signal as a matching-value in response to two or more match indication signals from a group-of-match-indication-signals being indicative of the input signal matching the target pattern; and
    maintain the output signal as the matching-value for the number of clock cycles that are represented by the group-of-match-indication-signals.

12. The transceiver (120) of any preceding claim, in which the pattern detection unit (300; 400) is configured to be operable in a first-mode-of-operation and a second-mode-of-operation, wherein:

    in the first-mode-of-operation:
    the correlator (304; 404) is configured to compare the target pattern with two or more of the plurality of samples of each bit from the shift register (302; 402) in order to determine whether or not the input signal matches the target pattern; and
    in the second-mode-of-operation:
    the correlator (304; 404) is configured to compare the target pattern with only one of the plurality of samples of each bit from the shift register (302; 402) in order to determine whether or not the input signal matches the target pattern; and
    the pattern detection unit (300; 400) further comprises a controller configured to set the mode of operation of the pattern detection unit (300; 400) based on user input or automatically.

13. The transceiver (120) of any preceding claim, in which the pattern detection unit (300; 400) comprises a memory for storing the target pattern, in which the memory is operatively connected to the correlator (304; 404) for providing the target pattern to the correlator (304; 404).

14. A key fob comprising the transceiver (120) of any preceding claim.

15. A method of operating a transceiver in an automotive access system, the method comprising
    receiving a multi-bit input signal at a shift register (302; 402);
    over-sampling the multi-bit input signal using the shift register (302; 402) such that each bit of the input signal is represented by a plurality of samples from the shift register (302; 402);
    comparing two or more of the plurality of samples of each bit of the input signal from the shift register (302; 402) with a target pattern associated with a vehicle base station (110);
    determining whether or not the input signal matches the target pattern based on the comparison; and
    sending an authorisation signal to the vehicle base station (110) in response to finding a match.

**Patentansprüche**

1. Automotive-Zugangssystem-Transceiver (120), wobei der Transceiver (120) Folgendes aufweist:

einen Empfänger (125) zum Empfangen eines Multi-Bit-Eingangssignals;
eine Datenempfangsschaltung (135);
einen Sender (150); und
eine Steuerschaltung (145) zum Steuern des Senders (150) und des Empfängers (125), um Signale mit einer Fahrzeugbasisstation (110) zu kommunizieren,
wobei die Datenempfangsschaltung (135) eine Mustererfassungseinheit (300; 400) aufweist, die dazu konfiguriert ist, das Multi-Bit-Eingangssignal mit einem Zielmuster zu vergleichen, das mit einer Fahrzeugbasisstation verknüpft ist,
wobei die Mustererfassungseinheit (300; 400) Folgendes aufweist:

ein Schieberegister (302; 402), das dazu konfiguriert ist, dass das Multi-Bit-Eingangssignal so überabgetastet wird, dass jedes Bit des Eingangssignals durch eine Mehrzahl von Samples in dem Schieberegister (302; 402) dargestellt ist; und
einen Korrelator (304; 404), der dazu konfiguriert ist, das Zielmuster mit zwei oder mehreren der Mehrzahl von Samples von jedem Bit aus dem Schieberegister (302; 402) zu vergleichen, um zu bestimmen, ob das Eingangssignal mit dem Zielmuster übereinstimmt oder nicht,

wobei die Steuervorrichtung dazu konfiguriert ist, als Reaktion auf ein Auffinden einer Übereinstimmung zwischen dem Eingangssignal und dem Zielmuster den Sender (150) der Fern-Transceiver-Schaltung (120) zum Senden eines Autorisationssignals zu der Fahrzeugbasisstation (110) zu betreiben.

2. Transceiver (120) gemäß Anspruch 1, wobei der Korrelator (304; 404) dazu konfiguriert ist, eine Übereinstimmung als Reaktion dessen zu bestimmen, dass jedes Bit des Zielmusters mit allen der zwei oder der mehreren Samples eines entsprechenden Bitwertes aus dem Schieberegister (302; 402) übereinstimmt.

3. Transceiver (120) gemäß Anspruch 1 oder Anspruch 2, wobei der Korrelator (304; 404) dazu konfiguriert ist, das Zielmuster mit aufeinanderfolgenden Samples aus dem Schieberegister (302; 402) von jedem Bit des Eingangssignals zu vergleichen.

4. Transceiver (120) gemäß einem der vorherigen Ansprüche, wobei der Korrelator (304) dazu konfiguriert ist, das Zielmuster mit einem aus der Mehrzahl von Samples von jedem Bit zu vergleichen und parallel das Zielmuster mit einem anderen aus der Mehrzahl von Samples von jedem Bit zu vergleichen, um das Zielmuster mit den zwei oder mehreren Samples von jedem Bit zu vergleichen.

5. Transceiver (120) gemäß Anspruch 4, wobei der Korrelator (304) Folgendes aufweist:

eine erste Mehrzahl von Bitvergleichseinheiten (312a-n), wobei jede Bitvergleichseinheit (312a-n) dazu konfiguriert ist, ein Sample eines besonderen Bits aus dem Schieberegister (302) mit einem entsprechenden Bitwert des Zielmusters zu vergleichen und einen ersten Bitvergleichswert auf der Grundlage des Vergleichs zu bestimmen;
eine zweite Mehrzahl von Bitvergleichseinheiten (316a-n), wobei jede Bitvergleichseinheit dazu konfiguriert ist, ein anderes Sample des besonderen Bits aus dem Schieberegister (302) mit einem entsprechenden Bitwert des Zielmusters zu vergleichen und einen zweiten Bitvergleichswert auf der Grundlage des Vergleichs zu bestimmen; und
eine Code-Vergleichseinheit (314), die dazu konfiguriert ist, den ersten und den zweiten Bitvergleichswert zu verarbeiten, um ein Übereinstimmungsindikatorsignal zu bestimmen, das darstellt, ob das Eingangssignal mit dem Zielmuster für einen einzigen Taktzyklus übereinstimmt oder nicht.

6. Transceiver (120) gemäß einem der Ansprüche 1 bis 3, wobei der Korrelator (404) dazu konfiguriert ist, das Zielmuster mit einem aus der Mehrzahl von Samples von jedem Bit zu vergleichen und nachfolgend das Zielmuster mit einem anderen aus der Mehrzahl von Samples von jedem Bit zu vergleichen, um das Zielmuster mit den zwei oder mehreren Samples von jedem Bit zu vergleichen.

7. Transceiver (120) gemäß Anspruch 6, wobei der Korrelator (404) Folgendes aufweist:

eine Mehrzahl von Bitvergleichseinheiten (412a-n), wobei jede Bitvergleichseinheit dazu konfiguriert ist, ein Sample eines besonderen Bits aus dem Schieberegister (402) mit einem entsprechenden Bitwert des Zielmusters zu vergleichen und einen Bitvergleichswert auf der Grundlage des Vergleichs zu bestimmen;
eine Code-Vergleichseinheit (414), die dazu konfiguriert ist, die Bitvergleichswerte zu verarbeiten, um ein Übereinstimmungsindikatorsignal zu bestimmen, das darstellt, ob die Eingangssignale mit dem Zielmuster für einen einzigen Taktzyklus übereinstimmen oder nicht; und

einen Sequenzdetektor (420), der dazu konfiguriert ist, zu bestimmen, ob das Eingangssignal mit dem Zielmuster auf der Grundlage von zwei oder mehreren Übereinstimmungsindikatorsignalen übereinstimmt oder nicht, die durch die Code-Vergleichseinheit (414) für verschiedene Taktzyklen bereitgestellt sind.

8. Transceiver (120) gemäß Anspruch 7, wobei die zwei oder mehreren Übereinstimmungsindikatorsignale durch die Code-Vergleichseinheit (414) für aufeinanderfolgende Taktzyklen bereitgestellt sind.

9. Transceiver (120) gemäß Anspruch 7 oder Anspruch 8, wobei der Sequenzdetektor (420) Folgendes aufweist:

einen Puffer, das dazu konfiguriert ist, das Übereinstimmungsindikatorsignal der Code-Vergleichseinheit (414) zu empfangen und ein gepuffertes Übereinstimmungsindikatorsignal bereitzustellen; und
eine UND-Einheit mit einem ersten Eingangsanschluss, einem zweiten Eingangsanschluss und einem Ausgangsanschluss, wobei der erste Eingangsanschluss dazu konfiguriert ist, das Übereinstimmungsindikatorsignal der Code-Vergleichseinheit (414) zu empfangen, wobei der zweite Eingangsanschluss dazu konfiguriert ist, das gepufferte Übereinstimmungsindikatorsignal von dem Puffer zu empfangen.

10. Transceiver (120) gemäß Anspruch 7, wobei der Sequenzdetektor (420) dazu konfiguriert ist, ein Ausgangssignal bereitzustellen;
das Ausgangssignal als einen Übereinstimmungswert als Reaktion auf zwei aufeinanderfolgende Übereinstimmungsindikatorsignale festzulegen, die angeben, dass das Eingangssignal mit dem Zielmuster übereinstimmt; und
das Ausgangssignal als den Übereinstimmungswert für dieselbe Anzahl von aufeinanderfolgenden Taktzyklen aufrecht zu erhalten, wobei die Übereinstimmungsindikatorsignale angeben, dass das Eingangssignal mit dem Zielmuster übereinstimmt.

11. Transceiver (120) gemäß Anspruch 7, wobei der Sequenzdetektor (420) dazu konfiguriert ist, ein Ausgangssignal bereitzustellen;
das Ausgangssignal als einen Übereinstimmungswert als Reaktion auf zwei oder mehrere Übereinstimmungsindikatorsignale von einer Gruppe-von-Übereinstimmungsindikatorsignalen festzulegen, die angeben, dass das Eingangssignal mit dem Zielmuster übereinstimmt; und
das Ausgangssignal als den Übereinstimmungswert für die Anzahl von Taktzyklen aufrecht zu erhalten, die durch die Gruppe-von-Übereinstimmungsindikatorsignalen dargestellt werden.

12. Transceiver (120) gemäß einem der vorherigen Ansprüche, wobei die Mustererfassungseinheit (300; 400) dazu konfiguriert ist, in einem ersten Betriebsmodus und in einem zweiten Betriebsmodus betrieben zu werden, wobei:

in dem ersten Betriebsmodus:
der Korrelator (304; 404) dazu konfiguriert ist, das Zielmuster mit zwei oder mehreren der Mehrzahl von Samples von jedem Bit aus dem Schieberegister (302; 402) zu vergleichen, um zu bestimmen, ob das Eingangssignal mit dem Zielmuster übereinstimmt oder nicht; und
in dem zweiten Betriebsmodus:
der Korrelator (304; 404) dazu konfiguriert ist, das Zielmuster mit nur einem der Mehrzahl von Samples von jedem Bit aus dem Schieberegister (302; 402) zu vergleichen, um zu bestimmen, ob das Eingangssignal mit dem Zielmuster übereinstimmt oder nicht; und
die Mustererfassungseinheit (300; 400) des Weiteren einen Controller aufweist, der dazu konfiguriert ist, den Betriebsmodus der Mustererfassungseinheit (300, 400) auf der Grundlage einer Benutzereingabe oder automatisch festzulegen.

13. Transceiver (120) gemäß einem der vorherigen Ansprüche, wobei die Mustererfassungseinheit (300; 400) einen Speicher zum Speichern des Zielmusters aufweist, wobei der Speicher mit dem Korrelator (304; 404) wirksam verbunden ist, um das Zielmuster für den Korrelator (304; 404) bereitzustellen.

14. Schlüsselanhänger mit dem Transceiver (120) gemäß einem der vorherigen Ansprüche.

15. Verfahren zum Betreiben eines Transceivers bei einem Automotive-Zugangssystem, wobei das Verfahren Folgendes aufweist:

Empfangen eines Multi-Bit-Eingangssignals an einem Schieberegister (302; 402);
Überabtasten des Multi-Bit-Eingangssignals unter Verwendung des Schieberegisters (302; 402) derart, dass jedes Bit des Eingangssignals durch eine Mehrzahl von Samples aus dem Schieberegister (302; 402) dargestellt wird;
Vergleichen von zwei oder mehreren der Mehrzahl von Samples von jedem Bit des Eingangssignals aus dem Schieberegister (302; 402) mit einem Zielmuster, das mit einer Fahrzeugbasisstation (110) verknüpft ist;
Bestimmen, ob das Eingangssignal mit dem Zielmuster auf der Grundlage des Vergleichs übereinstimmt oder nicht; und

Senden eines Autorisationssignals zu der Fahrzeugbasisstation (110) als Reaktion auf ein Auffinden einer Übereinstimmung.

### Revendications

1. Émetteur-récepteur (120) de système d'accès d'automobile, l'émetteur-récepteur (120) comprenant :

   un récepteur (125) pour recevoir un signal d'entrée multi-bit ;
   un circuit de réception de données (135) ;
   un émetteur (150) ; et
   un circuit de commande (145) pour commander l'émetteur (150) et le récepteur (125) pour communiquer des signaux avec une station de base du véhicule (110),
   où le circuit de réception de données (135) comprend une unité de détection de motif (300 ; 400) configurée pour comparer le signal d'entrée multi-bit avec un motif cible associé à une station de base du véhicule,
   où l'unité de détection de motif (300 ; 400) comprend :

      un registre à décalage (302 ; 402) configuré pour suréchantillonner le signal d'entrée multi-bit de manière à ce que chaque bit du signal d'entrée soit représenté par une pluralité d'échantillons dans le registre à décalage (302 ; 402) ; et
      un corrélateur (304 ; 404) configuré pour comparer le motif cible à deux échantillons, ou davantage, de la pluralité d'échantillons de chaque bit du registre à décalage (302 ; 402) afin de déterminer si le signal d'entrée correspond ou non au motif cible,

   où le contrôleur est configuré, en réponse à la découverte d'une correspondance entre le signal d'entrée et le motif cible, pour faire fonctionner l'émetteur (150) du circuit émetteur-récepteur distant (120) pour envoyer un signal d'autorisation à la station de base du véhicule (110).

2. Émetteur-récepteur (120) selon la revendication 1, dans lequel le corrélateur (304 ; 404) est configuré pour déterminer une correspondance en réponse à chaque bit du motif cible correspondant à l'ensemble des deux échantillons, ou davantage, d'une valeur binaire correspondante du registre à décalage (302 ; 402).

3. Émetteur-récepteur (120) selon la revendication 1 ou la revendication 2, dans lequel le corrélateur (304 ; 404) est configuré pour comparer le motif cible à des échantillons consécutifs du registre à décalage (302 ; 402) de chaque bit du signal d'entrée.

4. Émetteur-récepteur (120) selon l'une quelconque des revendications précédentes, dans lequel le corrélateur (304) est configuré pour comparer le motif cible à l'un de la pluralité d'échantillons de chaque bit et, en parallèle, pour comparer le motif cible à un autre de la pluralité d'échantillons de chaque bit afin de comparer le motif cible aux deux échantillons, ou davantage, de chaque bit.

5. Émetteur-récepteur (120) selon la revendication 4, dans lequel le corrélateur (304) comprend :

   une première pluralité d'unités de comparaison de bits (312a-n), chaque unité de comparaison de bits (312a-n) étant configurée pour comparer un échantillon d'un bit particulier du registre à décalage (302) à une valeur binaire correspondante du motif cible et déterminer une première valeur de comparaison de bit sur la base de la comparaison ;
   une seconde pluralité d'unités de comparaison de bits (316a-n), chaque unité de comparaison de bits étant configurée pour comparer un autre échantillon de bit particulier du registre à décalage (302) à une valeur binaire correspondante du motif cible et déterminer une seconde valeur de comparaison de bit sur la base de la comparaison ; et
   une unité de comparaison de code (314) configurée pour traiter les première et seconde valeurs de comparaison de bit afin de déterminer un signal d'indication de correspondance qui est représentatif du fait que le signal d'entrée corresponde, ou non, au motif cible pendant un cycle d'horloge unique.

6. Émetteur-récepteur (120) selon l'une quelconque des revendications 1 à 3, dans lequel le corrélateur (404) est configuré pour comparer le motif cible à l'un de la pluralité d'échantillons de chaque bit et, ensuite, pour comparer le motif cible à un autre de la pluralité d'échantillons de chaque bit afin de comparer le motif cible aux deux échantillons, ou davantage, de chaque bit.

7. Émetteur-récepteur (120) selon la revendication 6, dans lequel le corrélateur (404) comprend :

   une pluralité d'unités de comparaison de bit (412a-n), chaque unité de comparaison de bit étant configurée pour comparer un échantillon d'un bit particulier du registre à décalage (402) à une valeur binaire correspondante du motif cible et déterminer une valeur de comparaison de bit sur la base de la comparaison ;
une unité de comparaison de code (414) configurée pour traiter les valeurs de comparaison de bit afin de déterminer un signal d'indication de correspondance qui est représentatif du fait que le signal d'entrée corresponde, ou non, au motif cible pendant un cycle d'horloge unique ; et
un détecteur de séquence (420) configuré pour déterminer si le signal d'entrée correspond au motif cible sur la base de deux signaux d'indication de correspondance, ou davantage, fournis par l'unité de comparaison de code (414) pendant différents cycles d'horloge.

8. Émetteur-récepteur (120) selon la revendication 7, dans lequel les deux signaux d'indication de correspondance, ou davantage, sont fournis par l'unité de comparaison de code (414) pendant des cycles d'horloge consécutifs.

9. Émetteur-récepteur (120) selon la revendication 7 ou la revendication 8, dans lequel le détecteur de séquence (420) comprend :

une mémoire tampon configurée pour recevoir le signal d'indication de correspondance de l'unité de comparaison de code (414) et fournir un signal d'indication de correspondance placé en mémoire tampon ; et
une unité ET ayant une première borne d'entrée, une deuxième borne d'entrée et une borne de sortie, où la première borne d'entrée est configurée pour recevoir le signal d'indication de correspondance de l'unité de comparaison de code (414), la deuxième borne d'entrée est configurée pour recevoir le signal d'indication de correspondance placé en mémoire tampon depuis la mémoire tampon.

10. Émetteur-récepteur (120) selon la revendication 7, dans lequel le détecteur de séquence (420) est configuré pour :

fournir un signal de sortie ;
définir le signal de sortie comme une valeur de correspondance en réponse à deux signaux d'indication de correspondance consécutifs indiquant que le signal d'entrée correspond au motif cible ; et
maintenir le signal de sortie comme valeur de correspondance pendant le même nombre de cycles d'horloge consécutifs que ceux pendant lesquels les signaux d'indication de correspondance indiquent que le signal d'entrée correspond au motif cible.

11. Émetteur-récepteur (120) selon la revendication 7, dans lequel le détecteur de séquence (420) est configuré pour :

fournir un signal de sortie ;
définir le signal de sortie comme valeur de correspondance en réponse à deux signaux d'indication de correspondance, ou davantage, provenant d'un groupe de signaux d'indication de correspondance indiquant que le signal d'entrée correspond au motif cible ; et
maintenir le signal de sortie comme valeur de correspondance pendant le nombre de cycles d'horloge qui sont représentés par le groupe de signaux d'indication de correspondance.

12. Émetteur-récepteur (120) selon l'une quelconque des revendications précédentes, dans lequel l'unité de détection de motif (300 ; 400) est configurée pour fonctionner dans un premier mode de fonctionnement et un second mode de fonctionnement, où :
dans le premier mode de fonctionnement :

le corrélateur (304 ; 404) est configuré pour comparer le motif cible à deux, ou davantage, échantillons de la pluralité d'échantillons de chaque bit provenant du registre à décalage (302 ; 402) afin de déterminer si le signal d'entrée correspond, ou non, au motif cible ; et
dans le second mode de fonctionnement :

le corrélateur (304 ; 404) est configuré pour comparer le motif cible à un seul échantillon de la pluralité d'échantillons de chaque bit provenant du registre à décalage (302 ; 402) afin de déterminer si le signal d'entrée correspond, ou non, au motif cible ; et
l'unité de détection de motif (300 ; 400) comprend en outre un contrôleur configuré pour définir le mode de fonctionnement de l'unité de détection de motif (300 ; 400) sur la base de l'entrée utilisateur ou automatiquement.

13. Émetteur-récepteur (120) selon l'une quelconque des revendications précédentes, dans lequel l'unité de détection de motif (300 ; 400) comprend une mémoire pour stocker le motif cible, où la mémoire est connectée de manière opérationnelle au corrélateur (304 ; 404) pour fournir le motif cible au corrélateur (304 ; 404).

14. Porte-clés comprenant l'émetteur-récepteur (120) de l'une quelconque des revendications précédentes.

15. Procédé de fonctionnement d'un émetteur-récepteur dans un système d'accès d'automobile, le procédé comprenant les étapes suivantes :

recevoir un signal d'entrée multi-bit au niveau d'un registre à décalage (302 ; 402) ;

suréchantillonner le signal d'entrée multi-bit en utilisant le registre à décalage (302 ; 402) de manière à ce que chaque bit du signal d'entrée soit représenté par une pluralité d'échantillons du registre à décalage (302 ; 402) ;

comparer deux, ou davantage, échantillons de la pluralité d'échantillons de chaque bit du signal d'entrée provenant du registre à décalage (302 ; 402) à un motif cible associé à une station de base du véhicule (110) ;

déterminer si le signal d'entrée correspond, ou non, au modèle cible sur la base de la comparaison ; et

envoyer un signal d'autorisation à la station de base du véhicule (110) en réponse à la découverte d'une correspondance.

Figure 1

INPUT →

CLOCK 210

PATTERN
(n-bit) →

| 1 | 2 | 3 | ... | n-2 | n-1 | n |
| = | = | = | | = | = | = |

212a 212b 212c  214  212n-2 212n-1 212n

206  202  213a  208  213n-1  200  213n  204

## Figure 2

INPUT →

PATTERN →

| 1 | 1 | 2 | 2 | 3 | 3 | ... | ... | n | n |
| = | = | = | = | = | = | | | = | = |

312a 312b 312c  314  312n-2 312n-1 312n
316a 316b 316c  316n-2 316n-1

302  313a  313n-1  313n  300  304  316n

## Figure 3

INPUT →

PATTERN →

| 1 | 2 | 3 | ... | n-2 | n-1 | n |
| = | = | = | | = | = | = |

412a-n

RUN-LENGTH
DETECTOR →

402  413a  413n-1  400  413n  404  414  420

## Figure 4

520a

Match 522 524 Decision

&

Delay

521a 523a

525

Figure 5a

520b

526 527 528

Match 530 Decision

& ≥1

Delay Delay

521b 523b

529 531

Figure 5b

520c 552 538

540 542 550 Delay

Match 532 ≥1 ≥1

1

Delay

521c 523c

Delay & 0

Decision

534 544 548 546

Figure 5c

602

660 (Figure 2)
662 (Figure 5a)
664 (Figure 5b)
666 (Figure 5c)

| A | B | C |

652a 652b 652c 600

640

| .AA..BB..CC..... | → | 0 | 0 | 0 | 0 | ←671 |
| ..AA..BB..CC.... | → | 1 | 0 | 0 | 0 | ←672 |
| ...AA..BB..CC... | → | 1 | 1 | 1 | 1 | ←673 |
| ....AA..BB..CC.. | → | 0 | 0 | 1 | 1 | ←674 |
| ................ | → | 0 | 0 | 0 | 0 | |

642

| .A...B...C..... | → | 0 | 0 | 0 | 0 | ←681 |
| ..A...B...C.... | → | 0 | 0 | 0 | 0 | ←682 |
| ...A...B...C... | → | 1 | 0 | 0 | 0 | ←683 |
| ....A...B...C.. | → | 0 | 0 | 0 | 0 | ←684 |
| ............... | → | 0 | 0 | 0 | 0 | |

644

| AAA.BxB.CCC..... | → | 0 | 0 | 0 | 0 | ←691 |
| .AAA.BxB.CCC.... | → | 1 | 0 | 0 | 0 | ←692 |
| ..AAA.BxB.CCC... | → | 0 | 0 | 0 | 0 | ←693 |
| ...AAA.BxB.CCC.. | → | 1 | 0 | 0 | 1 | ←694 |
| ....AAA.BxB.CCC. | → | 0 | 0 | 0 | 1 | ←695 |
| .....AAA.BxB.CCC | → | 0 | 0 | 0 | 1 | ←696 |

Time

Shift register contents
Shifting left-to-right

Figure 6

700

702

704

706

708

| receiving a multi-bit input signal |

| over-sampling the multi-bit input signal such that each bit of the input signal is represented by a plurality of samples |

| comparing the target pattern and two or more of the plurality of samples of each bit |

| determining whether the input signal matches the target pattern based on the comparison |

## Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6438187 B1
- CA 2370577 A1
- US 2003169831 A1
- US 7796694 B1
- US 2014051364 A1